# EUROPEAN PATENT SPECIFICATION

(11) **EP 4 113 931 B1**
(45) Date of publication and mention of the grant of the patent: **31.01.2024**
(21) Application number: 21761053.4
(22) Date of filing: 01.03.2021
(51) Int. Cl.: H04L 9/40

(54) **INFORMATION PROCESSING METHOD AND APPARATUS, DEVICE, AND STORAGE MEDIUM**
INFORMATIONSVERARBEITUNGSVERFAHREN UND -VORRICHTUNG, VORRICHTUNG UND SPEICHERMEDIUM
PROCÉDÉ ET APPAREIL DE TRAITEMENT D'INFORMATIONS, DISPOSITIF, ET SUPPORT DE STOCKAGE

(30) Priority: 28.02.2020 CN 202010130080
(43) Date of publication of application: 04.01.2023
(73) Proprietor: Sangfor Technologies Inc., Shenzhen, Guangdong 518055 (CN)
(72) Inventor: NONG, Lean, Shenzhen, Guangdong 518055 (CN); TAO, Lei, Shenzhen, Guangdong 518055 (CN); LIU, Shuwen, Shenzhen, Guangdong 518055 (CN)
(74) Representative: Gevers Patents
(86) International application number: PCT/CN2021/078510
(87) International publication number: WO 2021/170141

(56) References cited:
- CN-A- 101 047 509
- CN-A- 101 478 539
- CN-A- 102 447 711
- CN-A- 104 811 449
- CN-A- 109 617 868
- CN-A- 110 417 717
- CN-A- 110 417 717
- CN-A- 111 371 774
- US-A1- 2013 212 679
- US-A1- 2015 026 793
- US-A1- 2016 088 000

## Description

### CROSS-REFERENCE TO RELATED APPLICATION

The application is based upon and claims priority to Chinese Patent Application No. 202010130080.8, filed on February 28, 2020.

### TECHNICAL FIELD

The invention relates to the technical field of computers, and relates to, but is not limited to, an information processing method and apparatus, a device, and a storage medium.

### BACKGROUND

A remote desktop allows a user to use any client to access, namely remotely log into, another remote computer namely a serving end, from any location through any connection. The remote desktop allows the user to reliably use all applications, documents and network resources on the remote computer as if the user himself/herself sits in front of the remote computer. Moreover, any application running locally may still run normally after the user uses the remote desktop.

These functions of the remote desktop are provided by a Remote Desktop Protocol (RDP) of Microsoft, and the RDP realizes the communication between the client and the serving end, so that remote display and input capabilities are provided for the applications running on the serving end. The document CN 110 417 717, 5th November 2019 (2019-11-05), discloses a method for identifying login behaviour.

### SUMMARY

Embodiments of the invention provide an information processing method and apparatus, a device, and a storage medium to solve at least one problem existing in the related art.

The technical solutions in the embodiments of the invention are implemented as follows.

In a first aspect, the embodiments of the invention provide an information processing method, which includes the following operations.

For a login behavior of a target source address, a session characteristic of a session corresponding to the login behavior and a security protocol type used by the session are identified. A session characteristic threshold is determined based on the security protocol type. The session characteristic is compared with the session characteristic threshold to determine a login status of the session.

In a second aspect, the embodiments of the invention provide an information processing apparatus, which includes: a third determining unit and an inference unit.

The third determining unit is configured to identify, for a login behavior of a target source address, a session characteristic of a session corresponding to the login behavior and a security protocol type used by the session. The third determining unit is further configured to determine a session characteristic threshold based on the security protocol type. The inference unit is configured to compare the session characteristic with the session characteristic threshold to determine a login status of the session.

In a third aspect, the embodiments of the invention provide a storage medium having stored thereon a computer program that, when executed by a processor, causes the processor to implement the steps in the above information processing method.

The embodiments of the invention provide an information processing method, which includes that: for a login behavior of a target source address, a session characteristic of a session corresponding to the login behavior and a security protocol type used by the session are identified; a session characteristic threshold is determined based on the security protocol type; and the session characteristic is compared with the session characteristic threshold to determine a login status of the session.

### BRIEF DESCRIPTION OF THE DRAWINGS

FIG. 1 illustrates a schematic diagram of an optional structure of an optional remote login system according to an embodiment of the invention.
FIG. 2A illustrates a schematic diagram of an optional structure of a remote login system according to an embodiment of the invention.
FIG. 2B illustrates a schematic diagram of an optional structure a remote login system according to an embodiment of the invention.
FIG. 3A illustrates an optional flowchart of an information processing method according to an embodiment of the invention.
FIG. 3B illustrates an optional offset diagram of a statistical time period according to an embodiment of the invention.
FIG. 3C illustrates a schematic diagram of optional distribution of the number of logins according to an embodiment of the invention.
FIG. 3D illustrates a schematic diagram of optional distribution of the number of logins according to an embodiment of the invention.
FIG. 4 illustrates an optional flowchart of an information processing method according to an embodiment of the invention.
FIG. 5 illustrates a schematic diagram of an optional structure of a computer device according to an embodiment of the invention.
FIG. 6 illustrates an optional flowchart of an information processing method according to an embodiment of the invention.
FIG. 7 illustrates an optional flowchart of an information processing method according to an embodiment of the invention.
FIG. 8 illustrates an optional flowchart of an information processing method according to an embodiment of the invention.
FIG. 9 illustrates an optional flowchart of an information processing method according to an embodiment of the invention.
FIG. 10 illustrates an optional flowchart of an information processing method according to an embodiment of the invention.
FIG. 11 illustrates a schematic diagram of an optional structure of an information processing system according to an embodiment of the invention.
FIG. 12 illustrates a schematic diagram of hardware entities of a computer device according to an embodiment of the invention.

### DETAILED DESCRIPTION

In order to make the purposes, technical solutions and advantages of the embodiments of the invention clearer, the technical solutions of the invention will further be described below in detail in combination with the drawings in the embodiments of the invention. The following embodiments are used to illustrate the invention, but are not intended to limit the scope of the invention.

The embodiments of the invention may provide an information processing method and apparatus, a device, and a storage medium. In practical application, the information processing method may be implemented by the information processing apparatus, and functional entities in the information processing apparatus may be collaboratively implemented by hardware resources of the computer device (such as a server), computing resources such as a processor, and communication resources (such as those configured to support the implementation of optical cables, cellular and other means of communication).

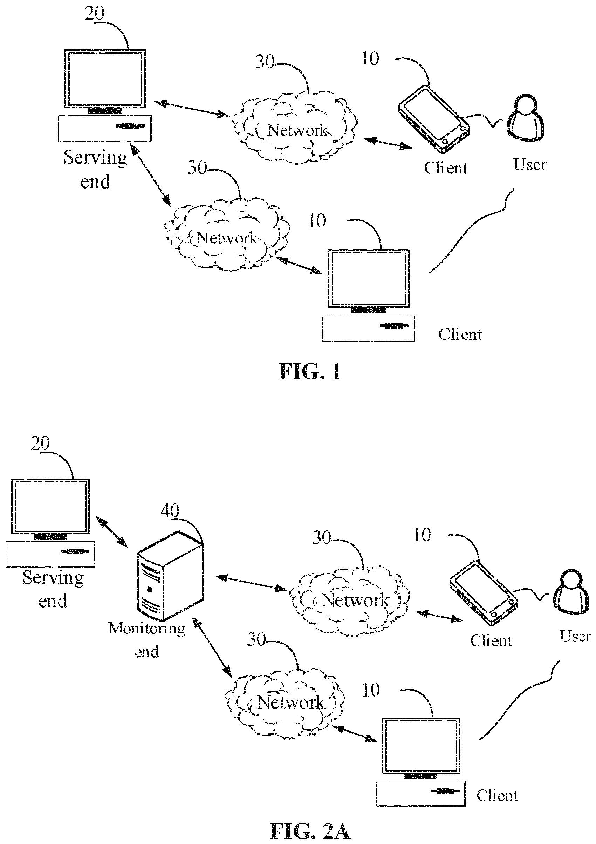

The information processing method of the embodiment of the invention may be applied to a remote login system as shown in FIG. 1. As shown in FIG. 1, the remote login includes a client 10 and a serving end 20. Herein, the client 10 and the serving end 20 are different physical entities, and the client 10 and the serving end 20 interact with each other through a network 30. A connection may be established between the client 10 and the serving end 20 through the network 30, and the client 10 may use all applications, documents and network resources on the serving end 20 through the established connection.

The serving end 20 may count a login behavior of the client 10 and detect whether the login behavior of the client 10 is an illegal attack behavior.

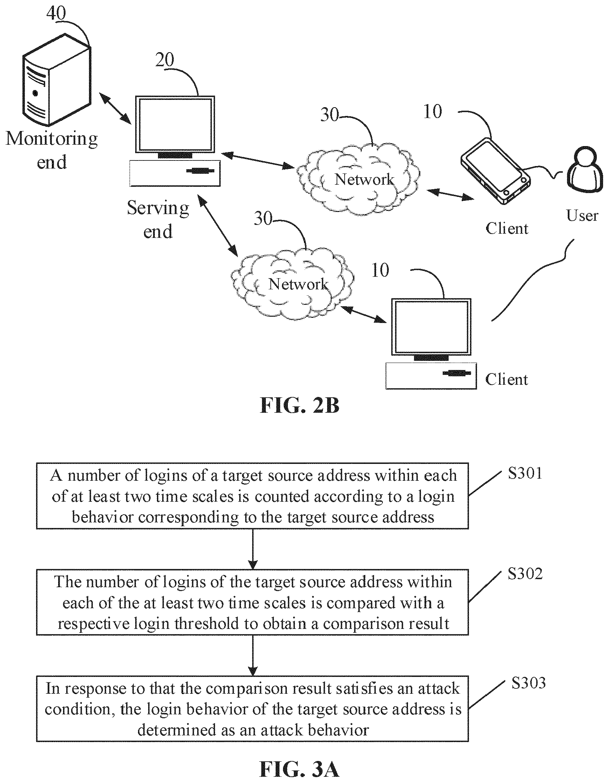

In one embodiment, based on the remote login system shown in FIG. 1, the remote login system may, as shown in FIG. 2A and FIG. 2B, further include: a monitoring end 40. The monitoring end 40 may intercept a data packet sent to the serving end 20 by the client 10 during remotely logging into the serving end 20, and detect whether the login behavior of the client 10 is an illegal attack behavior based on the intercepted data packet.

In one example, as shown in FIG. 2A, the monitoring end 40 is located between the serving end 20 and the client 10, and may intercept the data packet sent to the serving end before the data packet is sent to the serving end 20. At this time, the monitoring end 40 serves as an entrance for the client 10 to remotely log in to the serving end 20.

In one example, as shown in FIG. 2B, after the data packet is sent to the serving end 20, the monitoring end 40 intercepts the data packet received by the serving end 20 from the serving end.

In combination with the remote login system shown in FIG. 1, FIG. 2A or FIG. 2B, the embodiments provide an information processing method, which may effectively detect slow attack behaviors such as low-frequency and distributed brute force, and improve the security of the serving end.

Below, in combination with the schematic diagrams of the remote login system shown in FIG. 1, FIG. 2A and FIG. 2B, various embodiments of the information processing method and apparatus, the device, and the storage medium provided by the embodiments of the invention will be described.

The embodiments provide an information processing method, which is applied to a serving end or a monitoring end. Herein, the serving end or the monitoring end may be a computer device. The functions implemented by the method may be implemented by a processor in the computer device calling program codes. Of course, the program codes may be stored in a computer storage medium. It can be seen that the computer device includes at least the processor and the storage medium.

FIG. 3A illustrates an implementation flowchart of an information processing method according to an embodiment of the invention. As shown in FIG. 3A, the method may include the following steps.

At S301, a number of logins of a target source address within each of at least two time scales is counted according to a login behavior corresponding to the target source address.

In the embodiment of the invention, the login behavior of a client is determined according to a session established by a serving end, and one session corresponds to one login behavior. Herein, different clients are identified based on different source addresses. The source address may be an Internet Protocol (IP) address of the client.

After acquiring the session established by the serving end, the serving end or the monitoring end extracts the source address of each session, and classifies the sessions belonging to the same source address. For example, the session established by the serving end and acquired by the serving end or the monitoring end includes: a session 1, a session 2, a session 3, and a session 4. The source address of the session 1 is an address A, the source address of the session 2 is an address B, the source address of the session 3 is the address A, and the source address of the session 4 is an address C. In this case, the source addresses include the address A, the address B, and the address C. The session corresponding to the address A includes the session 1 and the session 3, that is, the address A has two login behaviors. The session corresponding to the address B includes the session 2, that is, the address B has one login behavior. The session corresponding to the address C includes the session 4, that is, the address C has one login behavior.

Here, the target source address may be any of the source addresses of the sessions established by the serving end.

The serving end or the monitoring end records any source address of the source addresses of the sessions established by the serving end as the target source address, records the login behavior of the target source address, and counts the number of logins of the target source address within each of multiple time scales. Those skilled in the art may easily understand that the number of logins is specifically the number of login failures.

In the embodiment of the invention, the durations of different time scales are different. In one example, the time scales include: 1 minute, 10 minutes, 30 minutes, and 1 hour. In one example, the time scales include: 5 minutes, and 30 minutes. In the embodiment of the invention, the number of time scales and the duration of each time scale are not limited.

Here, the number of logins of the target source address within different time scales is counted, and one of the following counting modes can be used.

Mode 1: The termination time of each time scale is the same time point. In one example, the current time is 11:00, and the time scale includes: 5 minutes, and 30 minutes, then the number of logins of the target source address within the two time periods from 10:55 to 11:00 and from 10:30 to 11:00 is counted respectively.

Mode 2: The termination time of a time scale and the starting time of another time scale are the same time point. In one example, the current time is 11:00, and the time scale includes: 5 minutes, and 30 minutes, then the number of logins of the target source address within the two time periods from 10:55 to 11:00 and from 10:25 to 10:55 is counted respectively.

In one example, the implementation of S301 includes that: the number of logins of the target source address within each of at least two time scales is counted according to the login behavior of the target source address within a set time period.

Here, the set time period is greater than or equal to the largest one of the at least two time scales. In one example, the time scales include: 1 minute, 10 minutes, 30 minutes, and 1 hour, and the set time period is 1 hour. In one example, the time scales include: 1 minute, 10 minutes, 30 minutes, and 1 hour, and the set time period is 2 hours.

Here, when the serving end has a session with the client, the serving end or the monitoring end records the acquired session, and stores the recorded session as a session log. During storage, the set time period may be used as a period for list storage, or a duration greater than the set time period may be used as a period for list storage. In one example, if the set time period is 2 hours, the session logs within 2 hours are stored as a list. In one example, if the set time period is 2 hours, the session logs within 24 hours that is greater than 2 hours are stored as a list.

In one example, the set time period is 2 hours, the serving end has login behaviors at 9:00:05, 9:00:35, 9:01:05, 9:01:35, 9:02:05, 9:02:35, 9:03:05, 9:03:35, 9:04:05, 9:04:35, 9:05:05, 9:05: 35, 9:06:05, 9:06:35, 9:07:05, 9:07:35, 9:08:05, 9:08:35, 9:09:05, 9:09:35, 9:10:05, 9:10:35, 9:35:57, 10:05:30, 10:15:15, 10:30:40, 10:40:05, 10: 40:50 and 11:00 from 9:00 to 11:00 respectively, and the time scale includes: 1 minute, 5 minutes, 10 minutes, and 30 minutes, then the number of logins from 9:00 to 9:01 is 2, the number of logins from 9:00 to 9:05 is 10, the number of logins from 9:00 to 9:10 is 20, and the number of logins from9:00 to 9:30 is 12.

In the embodiment of the invention, when the number of logins of the target source address within each of different time scales is counted, the statistics are only performed based on the login behaviors within the set time period greater than the maximum time scale, so that there is no need to count all login behaviors of the target source address, thereby improving the efficiency of data processing while ensuring the accuracy of statistical results.

At S302, the number of logins of the target source address within each time scale is compared with a respective login threshold to obtain a comparison result.

Different time scales correspond to different login thresholds. In one example, the time scale includes: 1 minute, 5 minutes, and 30 minutes. The login threshold corresponding to 1 minute is 10, the login threshold corresponding to 5 minutes is 20, the login threshold corresponding to 10 minutes is 20, and the login threshold corresponding to 30 minutes is 40.

After the number of logins of the target source address within each time scale is determined, the number of logins is compared to the login threshold corresponding to the time scale. In one example, the time scales include: 1 minute, 5 minutes, and 10 minutes. The login threshold corresponding to 1 minute is 10, the login threshold corresponding to 5 minutes is 20, and the login threshold corresponding to 10 minutes is 20. The number of logins of the target source address within 1 minute is 2. The number of logins of 2 is compared with the login threshold corresponding to 1 minute, and the number of logins within 1 minute is less than the corresponding login threshold. The number of logins of the target source address within 5 minutes is 10. The number of logins of 10 is compared with the login threshold of 20 corresponding to 5 minutes, and the number of logins within 5 minutes is less than the corresponding login threshold. The number of logins of the target source address within 10 minutes is 19. The number of logins 19 is compared with the login threshold of 20 corresponding to 5 minutes, and the number of logins within 10 minutes is less than the corresponding login threshold.

At S303, when the comparison result satisfies an attack condition, the login behavior of the target source address is determined as an attack behavior.

The attack condition is the set condition for determining whether the login behavior is an attack behavior. When the comparison result of S302 satisfies the attack condition, the login behavior of the target source address is an illegal attack behavior. When the comparison result of S302 does not satisfy the attack condition, the login behavior of the target source address is not an attack behavior, but a normal remote login behavior. Here, it is to be noted that the login behavior and/or the attack behavior may be displayed visually.

Here, when the login behavior of the target source address is determined as an attack behavior, an alarm may be sent to the serving end to indicate that there is an attack behavior at present, and the target source address is output.

In some embodiments, it is determined that the comparison result satisfies the attack condition in response to that: the number of attack logins of the target source address in one of the at least two time scales contains a number of attack logins that is greater than a login threshold corresponding to the time scale and is greater than a first number. Otherwise it is determined that the comparison result does not satisfy the attack condition.

Here, the number of logins greater than the login threshold corresponding to the time scale is called the number of attack logins. When the number of attack logins is greater than the first number, it is determined that the comparison result satisfies the attack condition.

In one example, the time scales include: 1 minute, 5 minutes, and 10 minutes. The login threshold corresponding to 1 minute is 10. The login threshold corresponding to 5 minutes is 20. The login threshold corresponding to 10 minutes is 20. The first number is 0. When the number of logins of the target source address within 1 minute, 5 minutes, and 10 minutes are: 2, 10, and 19 respectively, and the number of logins of the target source address within each time scale is less than the corresponding login threshold, then the comparison result corresponding to the address does not satisfy the attack condition, and the login behavior of the target source address is not an attack behavior, but a normal remote login behavior. When the number of logins of the target source address within 1 minute, 5 minutes, and 10 minutes are: 2, 10 and 23 respectively, the number of logins of the target source address within the time scale of 10 minutes, among the numbers of logins of the target source address in the time scales, is greater than the corresponding login threshold of 20, then the comparison result corresponding to the target source address satisfies the attack condition, and the login behavior of the target source address is an attack behavior.

In the embodiment of the invention, the implementation of S301 may include that: the number of logins of the target source address within each of at least two time scales is counted according to the login behavior of the target source address within different statistical time periods. Herein, the time interval between two adjacent statistical time periods is a time offset. Herein, the duration of the statistical time period is less than the set time period.

Here, after the number of logins of the target source address within each of at least two time scales is counted according to the corresponding login behavior in a first statistical time period, the first statistical time period is offset based on the time offset to obtain a second statistical time period. The number of logins of the target source address within each of at least two time scales is counted according to the corresponding login behavior in the second statistical time period. The second statistical time period is offset based on the time offset to obtain a third statistical time period, and so on.

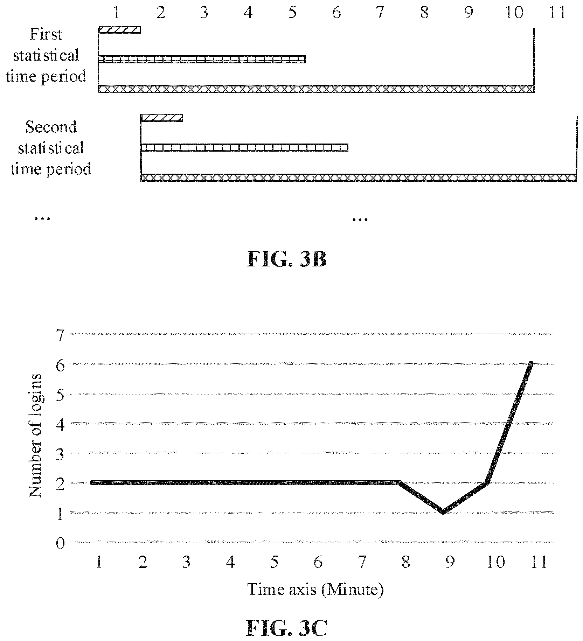

In one example, as shown in FIG. 3B, the time scales include 1 minute (filled with diagonal lines), 5 minutes (filled with square grids), and 10 minutes (filled with diamond grids), the time offset is1 minute, and the number of logins of the target source address within 1 minute, 5 minutes, and 10 minutes is respectively counted according to the login behaviors within the statistical time periods such as the first statistical time period (from first minute to tenth minutes), the second statistical time period (from second minutes to eleventh minutes), etc.

In practical application, when it is determined that the login behavior of the target source address within a statistical time period is not an attack behavior according to the login behavior of the target source address within the statistical time period, the statistical time period is offset based on the time offset to obtain a next statistical time period. Whether the login behavior of the target source address is an attack behavior is continued to be determined according to the login behavior of the target source address within the next statistical time period until the end of the statistics, or until it is determined that the login behavior of the target source address is an attack behavior.

In one example, the distribution of the number of logins of the target source address from the first minute to the eleventh minutes is as shown in FIG. 3C. The time scales include 1 minute, 5 minutes, and 10 minutes. The login threshold corresponding to 1 minute is 10, the login threshold corresponding to 5 minutes is 20, and the login threshold corresponding to 10 minutes is 20. Within the statistical time period of 1 to 10 minutes, the number of logins within 1 minute is 2, the number of logins within 5 minutes is 10, and the number of logins within 10 minutes is 19, then it is determined that the target source address is not an attack behavior within 1 to 10 minutes. Within the second to eleventh minutes, the number of logins within 1 minute is 2, the number of logins within 5 minutes is 10, and the number of logins within 10 minutes is 23 (greater than the threshold of 20 corresponding to 10 minutes), it is determined that the target source address performs an attack behavior within 2 to 11 minutes, and the login behavior of the target source address is an attack behavior.

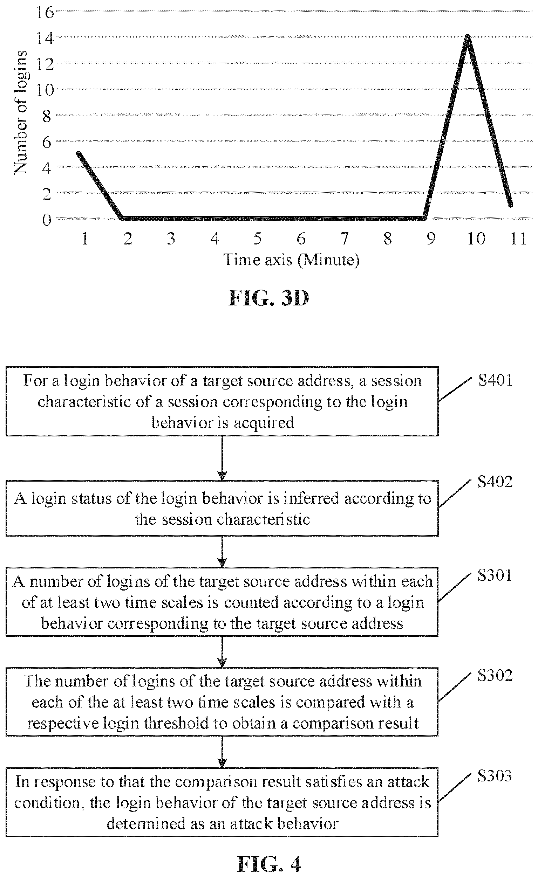

In one example, the distribution of the number of logins of the target source address from the first minute to the eleventh minutes is as shown in FIG. 3D. The time scale includes 1 minute, 5 minutes, and 10 minutes, and the login threshold corresponding to 1 minute is 10, the login threshold corresponding to 5 minutes is 20, and the login threshold corresponding to 10 minutes is 20. Within the statistical time period of first to tenth minutes, the number of logins within 1 minute is 5 (greater than the threshold of 2 corresponding to 1 minute), the number of logins within 5 minutes is 5, and the number of logins within 10 minutes is 19, then it is determined that the target source address performs an attack behavior within 1 to 10 minutes, and the login behavior of the target source address is an attack behavior.

In the information processing method provided by the embodiment of the invention, a number of logins of the target source address within each of at least two time scales is counted according to the login behavior corresponding to the target source address, each of the at least two time scales has a respective different duration. The number of logins of the target source address within each of the at least two time scales is compared with a respective login threshold to obtain a comparison result. In response to that the comparison result satisfies an attack condition, the login behavior of the target source address is determined as an attack behavior. Therefore, the slow attack behavior is detected through multiple time scales, thereby improving the security of the serving end.

In some embodiments, as shown in FIG. 4, before S301, the method further includes the following operations.

At S401, for a login behavior of the target source address, a session characteristic of a session corresponding to the login behavior is acquired.

When a session connection of the session is established between a serving end and a client, the serving end or the monitoring end intercepts a data packet in the session, and parses the intercepted data packet to obtain the session characteristic of the session. The session characteristic may include one or a combination of: a session duration, a number of large data packets, and a total length of large data packets. Herein, a number of bytes in each of the large data packets is greater than a fourth number. The fourth number may be 1000 or the like. There is no limitation on the size of the fourth number in the embodiments of the invention. Here, the session characteristic may further include: a content type of the data packet.

In practical application, when parsing the session characteristic of the session, the serving end or the monitoring end may also acquire a user name used by the client in the session, that is, a login user name used to log into the serving end.

In one example, after obtaining the session characteristic by parsing the intercepted data packet in the session, the serving end or the monitoring end directly executes S402.

In one example, when the serving end or the monitoring end obtains the session characteristic of the session by parsing the intercepted data packet in the session, the session characteristic may be stored in a database as part of the content of a session log. Before S301 is executed, the session characteristic in the session log is acquired from the database to execute S402.

At S402, the login status of the login behavior is inferred according to the session characteristic.

After the session characteristic is acquired, the session characteristic is matched with a set login success condition. When the session characteristic satisfies the login success condition, it is considered that the login status of the login behavior corresponding to the session is login success; otherwise it is considered that the login status of the login behavior corresponding to the session is login failure. Here, the login success condition may be a condition set based on the session characteristic. Here, it is to be noted that the login behavior and/or the login status may be displayed visually.

In one example, the login success condition is that the session characteristic satisfies a corresponding session characteristic threshold. Here, the session characteristic threshold corresponding to a session duration is a session duration threshold, the session characteristic threshold corresponding to the number of large data packets is a number threshold, and the session characteristic threshold corresponding to the total length of the large data packets is a length threshold.

In the embodiment of the invention, when the session characteristic includes a content type of the data packet, the login success condition may include that the content type of the data packet is a set content type.

Here, the login status of the login behavior may be inferred based on one or a combination of session characteristics.

In the embodiment of the invention, after the serving end or the monitoring end obtains the session characteristic, S402 is directly executed. After S402 is executed, the inferred login status may be added to the session log of the session.

In one embodiment, the implementation of S402 includes the following operations.

At S4021, a security protocol type used by the session is acquired.

At S4022, the session characteristic of the session is compared with a session characteristic threshold corresponding to the security protocol type, and the login status of the session is determined according to a comparison result.

Here, the security protocol type may include: a standard RDP security protocol, a Credential Security Support Provider Protocol (CredSSP), a Transport Layer Security (TLS) protocol, a CredSSP coupled with the Early User Authorization (CredSSP EARLY AU), an enhancement of the standard RDP security protocol (an RDTLS protocol), etc.

In the embodiment of the invention, the security protocol type used by the session may be identified by an encryption algorithm field in the data packet.

In one example, the encryption algorithm field may include: a protocol selection field (rdp.negReq.selectedProtocol) and a request protocol field (rdp.client.requestedProtocols). When the rdp.negReq.selectedProtocol field is not empty, the security protocol type used by the session is considered to be the standard RDP security protocol. When the rdp.negReq.selectedProtocol field is empty, the security protocol type used by the session is determined according to rdp.client.requestedProtocols. Here, when the rdp.negReq.selectedProtocol field is standard, the security protocol type is the standard RDP security protocol. When the rdp.negReq.selectedProtocol field is hybrid, the security protocol type is the CredSSP protocol. When the rdp.negReq.selectedProtocol field is ssl, the security protocol type is the TLS protocol. When the rdp.negReq.selectedProtocol field is hybrid_ex, the security protocol type is the CredSSP EARLY AU protocol. When the rdp.negReq.selectedProtocol field is rdstls, the security protocol type is the RDTLS protocol.

Each security protocol type corresponds to a respective different session characteristic threshold. The corresponding session characteristic threshold is determined according to the security protocol type used by the session, and the session characteristic is compared with the session characteristic threshold to determine whether the session characteristic satisfies the login success condition.

In one embodiment, the session characteristic includes a session duration. In such a case, the implementation of S402 includes an implementation mode 1: when the session duration of the session is greater than a session duration threshold, it is determined that the login status of the session is login success. When the session duration of the session is less than or equal to the session duration threshold, it is determined that the login status of the session is login failure.

Here, the login success condition is that: the session duration is greater than the session duration threshold. When the session duration of the session satisfies the login success condition, it is considered that the login status of the session is login success; otherwise it is considered that the login status of the session is login failure.

In one embodiment, the session characteristic includes at least one of a number of large data packets or a total length of the large data packets, and a number of bytes of each large data packet is greater than a fourth number. In such a case, the implementation of S402 includes an implementation mode 2.

When the number of large data packets is greater than a number threshold and/or the total length of the large data packet is greater than a length threshold, it is determined that the login status of the session is login success. When the number of the large data packets is less than or equal to the number threshold and/or the total length of the large data packet is less than or equal to the length threshold, it is determined that the login status of the session is login failure.

Here, the login success condition is that: the number of large data packets is greater than the number threshold and/or the total length of the large data packet is greater than the length threshold. When the session duration of the session satisfies the login success condition, it is considered that the login status of the session is login success; otherwise it is considered that the login status of the session is login failure.

In practical application, the implementation of S402 may be a combination of the implementation mode 1 and the implementation mode 2.

In one embodiment, the operation that the intercepted data packet in the session is parsed to obtain the session characteristic of the session includes the following operations.

At S4011, whether the protocol type used by the session is the target protocol type is identified.

At S4012, in a case where the protocol type used by the session is the target protocol type, the data packet of the session is parsed based on the target protocol type, and the session characteristic of the session is extracted.

Here, the target protocol type includes: one or more of RDP and TLS protocols. Herein, the TLS protocol is configured to encrypt data at the transport layer, so that the transmitted network data is not eavesdropped by an attacker. In the embodiment of the invention, a session whose protocol type used at the application layer is the RDP may be referred to as an RDP session. Here, it may also be considered that a session whose security protocol type is the TLS uses the RDP at the application layer. When a session uses the TLS protocol at the transport layer, it is considered that the session uses the RDP at the application layer, thereby identifying the session as an RDP session.

When the target protocol type includes: the RDP, whether the data packet in the session conforms to the characteristic of the RDP is determined. When the data packet conforms to the characteristic of the RDP, it is determined that the protocol of the data packet is the RDP. When the data packet does not conform to the characteristic of the RDP, it is determined that the protocol of the data packet is not the RDP. In one example, the characteristic of the RDP may include that: a version field and a Reversed field of international organization for standardization (ISO) transport services on top of the TCP (TPKT) configured to transport data payloads of the application layer, and X.224 data type of the next layer are all fixed values. Herein, the fixed value may be set according to actual needs.

When the target protocol type includes the TLS protocol, whether the data packet in the session conforms to the characteristic of the TLS protocol is determined. When the data packet conforms to the characteristic of the TLS protocol, it is determined that the protocol of the data packet is the TLS protocol. When the data packet does not conform to the characteristic of the TLS protocol, it is determined that the protocol of the data packet does not include the TLS protocol. The characteristic of the TLS protocol may include that: a value of the version field and/or the content type field is a specified value. Herein, the specified value may be set according to actual needs.

When the protocol type used by the session is the target protocol type, the session characteristic of the session is extracted; otherwise the session is ignored.

In one embodiment, the target protocol type includes a preset transport security protocol. The operation that whether the protocol type used by the session is the target protocol type is identified includes the following operations.

When the number of data packets in the session whose protocol types are the preset transport security protocol exceeds a second number, analysis of the protocol type of a next data packet in the session is stopped, and the protocol type used by the session is identified as the preset transport security protocol.

In an embodiment, in a case where the preset transport security protocol includes the TLS protocol, the implementation of S4011 may include that: when the number of data packets in the session whose protocol types are the TLS protocol exceeds the second number, analysis of the protocol type of the next data packet in the session is stopped, and the protocol type used by the session is identified to include the TLS protocol.

When the number of data packets using the TLS protocol in the session does not reach the second number, whether the protocol used by the data packet in the session is the TLS protocol or RDP is determined. When the number of data packets using the TLS protocol in the session reaches the second number, it is considered that the protocol type used by the session is the TLS protocol, and whether the type of the next data packet is the TLS protocol or RDP is no longer determined, and it is considered that the protocol used by the subsequent data packets is the TLS protocol.

The second number may be three. In the embodiment of the invention, there is no limitation on the size of the second number.

Of course, the preset transport security protocol may also be other transport security protocols, which is not limited herein.

In one embodiment, when the number of data packets in the session for which the protocol type analysis exceeds a third number, the analysis of the protocol type of the next data packet in the session is stopped, and the protocol type of the data packets of the session is identified to be not the target protocol type.

When it is determined that the protocol type of the data packet in the session is not the target protocol type, it is determined that the protocol type analysis of the data fails. When the number of data packets for which the protocol type analysis fails exceeds the third number, the protocol type of the data packet in the session is no longer determined. When the number of data packets of which the protocol type is identified does not exceed the third number, whether the protocol of the data packet is the TLS protocol or RDP is continued to be determined. Here, the third number may be a value less than or equal to four.

In the embodiment of the invention, the data packet whose security protocol type is the TLS protocol and the data packet whose protocol type is the RDP may be transmitted through the same port. Therefore, when the security protocol type used by the data packet is the TLS protocol, it may be considered that the application layer protocol used by the data is the RDP, but when the protocol type of the application layer used by the data packet is the RDP or not, and the security protocol type used by the data packet needs to be further determined.

In practical application, determining whether the protocol used by the session is the TLS protocol based on the second number is combined with determining whether the protocol used is not the TLS protocol or RDP based on the third number. At this time, in the session, if it is determined that the number of data packets using the TLS protocol does not exceed the second number, and the number of data packets of which the protocol type analysis fails does not exceed the third number, it is determined whether the session ends. In a case where the session does not end, whether the protocol type of the next data packet of the session is the TLS protocol or RDP is continued to be determined.

The information processing method provided in the embodiment of the invention can quickly identify the protocol type used by the session based on the second number and the third number, thereby improving the processing efficiency of information processing.

In the related art, except for the first two encryption algorithm negotiation packets which are non-encrypted, other data packets of an RDP message are encrypted. Therefore, the login status of the login behavior cannot be determined. The information processing method provided by the embodiments of the invention can identify the login status of the session through the session characteristic of the session established in the login behavior, and display a detection result of whether the login behavior is an attack behavior and the login status of the login behavior, so that a user can take corresponding measures in time to ensure data security.

Hereinafter, by taking a remote login scenario as an example, an attack behavior detection method provided by the embodiment of the invention will be further described.

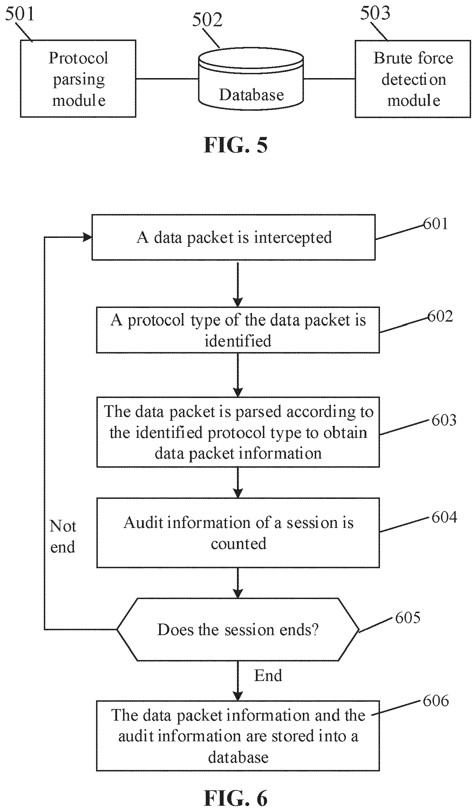

A computer device for implementing the information processing method in the embodiment of the invention may be as shown in FIG. 5, which includes: a protocol parsing module 501, a database 502, and a brute force detection module 503.

The protocol parsing module 501 parses the data packet in the RDP session, audits the necessary session information such as cookies, the number of downlink packets, the number of packets larger than 1000 bytes among the downlink packets, the encryption algorithm, etc., and saves the audited session information to the database 502 as an audit log.

The database 502 stores the audit logs in a period of 24 hours. Herein, the audit logs in one period are stored in a table.

The brute force detection module 503 reads the audit logs of earlier four hours from the database every four hours, performs brute force behavior detection according to the read audit logs to obtain a detection result, and stores the detection result in the database 502 again.

The protocol parsing process of parsing the data packet in the RDP session by the protocol parsing module 501 is as shown in FIG. 6, which includes the following operations.

At S601, the data packet is intercepted.

Here, the data packet in the session established during remotely logging into the serving end by the client is intercepted.

At S602, the protocol type of the data packet is identified.

Characteristic matching is performed on the message content in the data packet according to the protocol type, and the corresponding protocol type is output if a protocol characteristic is satisfied. Here, the identified protocol type may include: the TLS protocol, the RDP, and other protocols. Herein, the TLS protocol is a preset transport security protocol. Furthermore, in addition to applying the RDP remote login protocol, a Secure Shell (SSH) may also be used.

At S603, the data packet is parsed according to the identified protocol type to obtain data packet information.

Here, the data packets are analyzed in corresponding formats respectively according to the result identified in S602. The protocol involved in remote login may include the TLS protocol and the RDP, and then the data packets identified as the TLS protocol and the RDP are parsed based on the TLS protocol and the RDP to obtain the data packet information. Herein, the TLS protocol is the security protocol of the transport layer, and the RDP is the application layer protocol. When the identification result is the RDP, a cookie field (rt_cookie) and an encryption algorithm field (rdp.negReq.selectedProtocol or rdp.client.requested Protocols) are extracted from the data packet respectively. When the identification result is the TLS protocol, a version field (field ssl.record.version) and a content type field (ssl.record.content_type) of the last response message are extracted from the data packet.

At S604, statistics is made about the audit information of the session.

For the RDP session identified as using the TLS protocol or the RDP, statistics is made about the audit information, namely the session characteristics, such as the session duration, the number of data packets in downstream traffic, and the number of large data packets in downstream traffic, and the statistical audit information is taken as the session characteristics of the current session. Here, a data packet with a payload larger than 1000 bytes may be defined as a large data packet.

In practical application, a session using the RDP is an RDP session; and based on that the TLS protocol has the same port as the RDP, a session using the TLS protocol may also be considered as an RDP session.

At S605, whether the session ends is determined.

When the session ends, S606 is executed to store the data packet information and the audit information in the database 502. When the session does not end, S601 is continued to be executed to intercept the next data packet of the current session until the session ends.

Here, whether the session ends may be determined according to a TCP message, and when a TCP message having a reset (RST) or finish (FIN) message is detected, it is considered that the current session ends.

Here, the recorded data of the session is the session log of the session.

Herein, the implementation of S602 includes the following operations.

At S701, whether the cumulative number of identification times of the TLS in the current session exceeds a first threshold M is determined.

When the cumulative number of identification times of the TLS in the current session exceeds the first threshold M, that is, the second number, S702 of outputting the protocol type TLS is executed. When the cumulative number of identification times of the TLS in the current session does not exceed the first threshold M, S703 is executed.

When it is identified for multiple times by accumulation that the session includes a data packet conforming to the TLS protocol characteristic, and the cumulative number of times reaches the first threshold M, it may be considered that the protocol types of the subsequent data packets in the session are all the TLS, and the protocol type of the data packets is directly determined to be the TLS without performing protocol identification for the data packets of the session.

At S703, whether a number of identification failures exceeds a second threshold Q is determined.

When the number of identification failures exceeds the second threshold Q, that is, the third number, S708 is executed. When the number of identification failures does not exceed the second threshold Q, S704 is executed.

In the RDP session traffic, only the first four data packets with valid data (two request data packets and two response data packets) are unencrypted, and subsequent encrypted data cannot be identified. Therefore, when the cumulative number of identification failures exceeds the second threshold Q (which may be 3), protocol identification is no longer performed for the message of the session, and S708 is directly executed.

At S704, whether the protocol type of the data packet is the RDP is identified.

The characteristics of the upper two layers (the TPKT and X.224) of the RDP are compared with the data packet, and if the data packet meets the characteristics of the TPKT and X.224, it indicates that the protocol type of the data packet is the RDP, and S705 of outputting the RDP is executed. If the data packet does not meet the characteristics of the TPKT and X.224, it indicates that the protocol type of the data packet is not the RDP, and S706 is executed.

In an example, the characteristics of the TPKT and X.224 include that: the version field of a header of the TPKT is 3, Reserved is 0, and the data type of X.224 is a fixed value. Here, the fixed values include: 0x0E, 0x0D, 0x08, 0x0F, 0x07. Herein, as the fixed value is different, the message type of the data packet is different.

In an example, the value of the data type of X.224 is 0x0E, then the message type of the data packet is a connection request. The value of the data type of X.224 is 0x0D, then the message type of the data packet is message acknowledgment. The value of the data type of X.224 is 0x08, then the message type of the data packet is a disconnection request. The value of the data type of X.224 is 0x0F, then the message type of the data packet is data. The value of the data type of X.224 is 0x07, then the message type of the data packet is error.

At S706, whether the protocol type of the data packet is the TLS protocol is identified.

The characteristic of the TLS is compared with the data packet. If the data packet meets the characteristic of the TLS protocol, it indicates that the protocol type of the data packets is the TLS protocol, S702 of outputting the TLS protocol is executed, and the cumulative number of identification times of the TLS protocol is incremented by one. If the data packet protocol does not meet the characteristics of the TPKT and X.224, it indicates that the protocol type of the data packet is not the TLS protocol, and S707 is executed.

Here, the characteristic of the TLS protocol includes a version field and a content type field, and the values of the version field and the content type field are set values. When the above two fields can be parsed out from the data packet, and these two fields satisfy the set values, it is considered that the protocol used by the data packet is the TLS protocol.

In an example, the set value corresponding to the version field includes: 0x0300, 0x0301, 0x0302, 0x0303, and 0x0304. Herein, the set value 0x0300 indicates that the version is SSL3.0, the set value of 0x0301 indicates that the version is TLS1.0, the set value of 0x0302 indicates that the version is TLS1.1, the set value of 0x0303 indicates that the version is TLS 1.2, and the set value 0x0303 indicates that the version is TLS 1.3.

In an example, the set value corresponding to the content type includes: 20, 21, 22, 23 and 255. Herein, the set value of 20 indicates that the content type of the data packet is a key exchange, the set value of 21 indicates that the content type of the data packet is a warning, the set value of 22 indicates that the content type of the data packet is handshake, the set value 23 indicates that the content type of the data packet is application data, and the set value 225 indicates that the content type of the data packet is reserved.

At S707, the number of failures in analysis of the protocol type is incremented by one.

At S708, other protocol types are output.

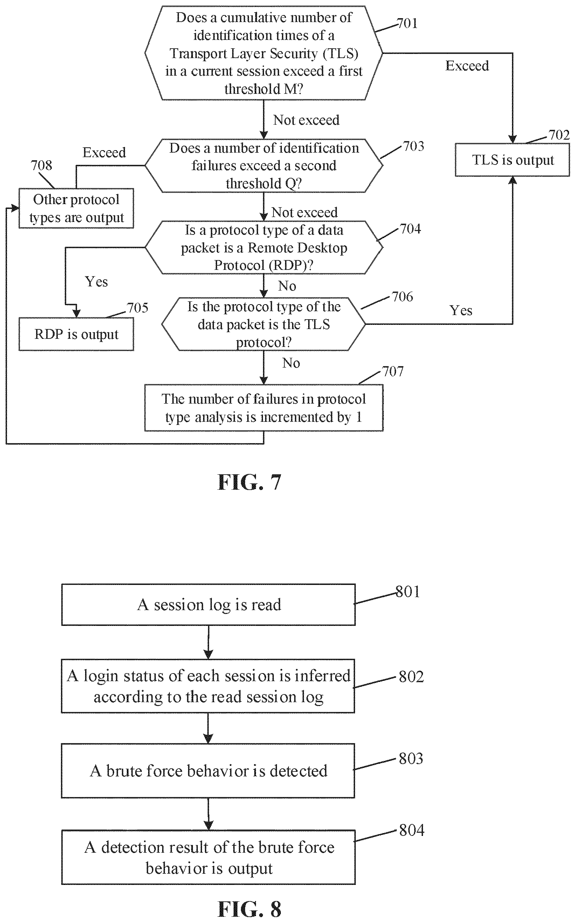

In the embodiment of the invention, the process implemented by the brute force detection module 503 is as shown in FIG. 8, which includes the following operations.

At S801, the session log is read.

Here, all session logs recorded within four hours from the current time are read from the database 502.

At S802, the login status of each session is inferred according to the read session log.

Here, for each session log, the login status of the session log is predicted based on the session duration, the number of large data packets in the downstream traffic, and the encryption algorithm, and the predicted login status is added to the session log.

At S803, a brute force behavior is detected.

The read session logs are classified according to a source IP. Different source IPs correspond to different session log sets respectively.

For each source IP, the session logs in the session log set corresponding to the source IP are sorted in chronological order. The number of logins of the source IP within each time scale of 1 minute, 5 minutes, 10 minutes, 30 minutes, 1 hour, 2 hours and 4 hours is counted, and the counted number of logins is compared with the login threshold corresponding to the time scale. Herein, the login threshold corresponding to each time scale may be as shown in Table 1. If there are more than one number of logins exceeding the login thresholds corresponding to the time scales, it is considered that the source IP has an RDP password brute force behavior, that is, the login behavior is an attack behavior. Otherwise it is considered that the login behavior of the source IP is a normal login behavior.

**Table 1. Examples of login thresholds corresponding to time scales**

| | | | | | | | |
|---|---|---|---|---|---|---|---|
| Time scale (minute(s)) | 1 | 5 | 10 | 30 | 60 | 120 | 240 |
| Login threshold | 10 | 20 | 20 | 40 | 75 | 150 | 300 |

At S804, a detection result of brute force behavior is output.

The source IP detected to have the brute force attack behavior and its corresponding attacked IP list, the login status, the number of attacks and the duration form a corresponding attack log and the attack log is saved in the database.

In the embodiment of the invention, the implementation of S802 includes the following operations.

At S901, a user name of the RDP session is acquired.

For each RDP session, whether there is a Cookie field in the session is determined. If so, the part after "mthash=" in the Cookie field is used as a login user name; otherwise the login user name is set empty.

At S902, the security protocol type used by the RDP session is determined.

For each RDP session, the encryption algorithm of the session, that is, the security protocol type, is determined.

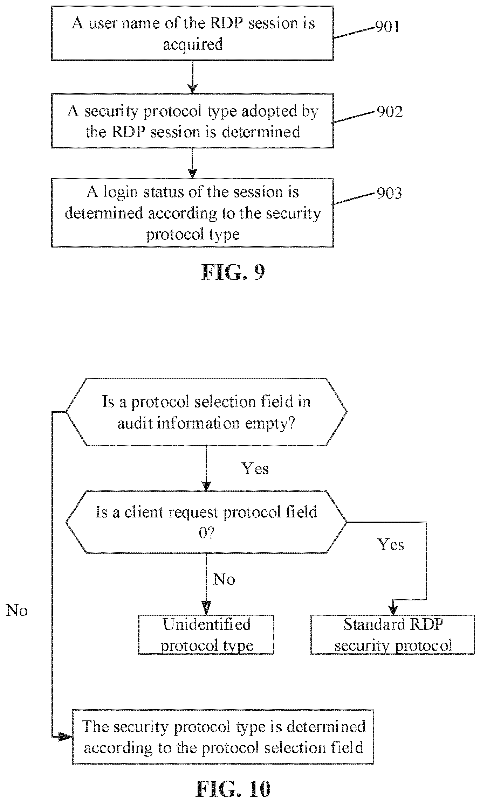

Here, as shown in FIG. 10, whether the protocol selection field (rdp.negReq.selectedProtocol) in the audit information is empty is checked. If not, the security protocol type is determined according to the protocol selection field. Herein, the security protocol type is one of the standard RDP security protocol, the CredSSP, the TLS protocol, the CredSSP EARLY AU and the RDTLS protocol. When the security protocol type is none of the above security protocol types or is an unidentifiable security protocol type, that is, the security protocol type is the unidentified protocol type "unknown", then the session log is ignored. If the security protocol type is one of the above security protocol types, whether a client request protocol field (rdp.client.requestedProtocols) is 0 is checked. If the client request protocol field is 0, the security protocol type is the standard RDP security protocol; otherwise the security protocol type is unknown, and the session log is ignored.

Here, when rdp.negReq.selectedProtocol is "standard", the security protocol type is the standard RDP security protocol. When rdp.negReq.selectedProtocol is "hybrid", the security protocol type is the CredSSP protocol. When rdp.negReq.selectedProtocol is "ssl", the security protocol type is the TLS protocol. When rdp.negReq.selectedProtocol is "hybrid_ex", the security protocol type is the CredSSP EARLY AU protocol. When rdp.negReq.selectedProtocol is "rdstls", the security protocol type is the RDTLS protocol.

At S903, the login status of the session is determined according to the security protocol type.

Here, the conditions for determining the login status of the session and the like include:
a condition (a) that the number of downlink large data packets is greater than the number threshold;
a condition (b) that the total length of downlink large data packets is greater than the length threshold; and
a condition (c) that the session duration is greater than the duration threshold.

When the session characteristic of the session satisfies one of the above conditions (a) and (b), or satisfies the above condition (c), it is considered that the login status of the session is login success; otherwise the login fails.

In the embodiment of the invention, for the security protocols such as the standard RDP security protocol, theCredSSP, theTLS protocol, the CredSSP EARLY AU, and the RDTLS protocol, different types of security protocols correspond to different thresholds of the same type. For example, the standard RDP security protocol, the CredSSP, the TLS protocol, the CredSSP EARLY AU, and the RDTLS protocols correspond to different number thresholds respectively.

In practical application, if the security protocol type used by the RDP session is the CredSSP, whether a header message field of the last downlink TLS session in the RDP session is an alarm field. If so, it is determined that the login status of the RDP session is login failure. If not, the login status of the session is determined based on the threshold.

Further, the login behavior and/or the attack behavior and/or the login status are visually displayed.

In order to facilitate the viewing of the user, the login behavior of the target source address, and/or the attack behavior satisfying the attack condition, and/or the login status corresponding to each login behavior may also be displayed visually.

Based on the foregoing embodiments, the embodiments of the invention provide an information processing apparatus. Various modules included in the apparatus and various units included in the modules may be implemented by a processor in a computer device, or of course may be implemented by a specific logic circuit. In the implementation process, the processor may be a Central Processing Unit (CPU), a Microprocessor Unit (MPU), a Digital Signal Processor (DSP), or a Field Programmable Gate Array (FPGA) or the like.

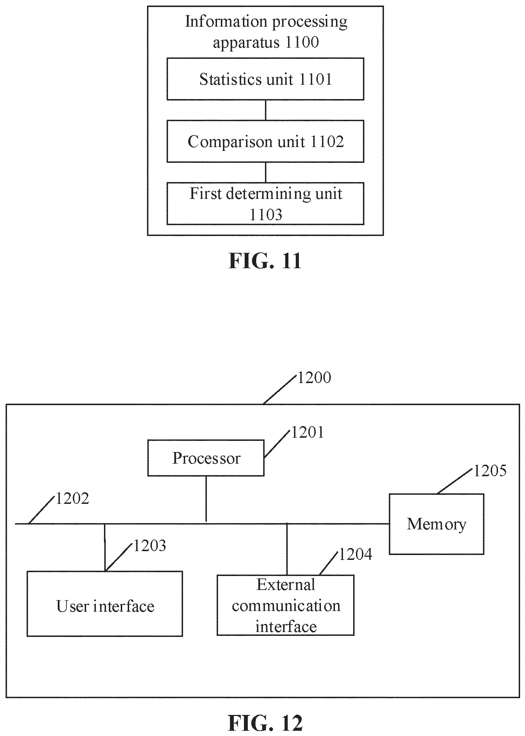

FIG. 11 illustrates a schematic structural diagram of composition of an information processing apparatus according to an embodiment of the invention. As shown in FIG. 11, the apparatus 1100 includes: a statistics unit 1101, a comparison unit 1102, and a first determining unit 1103.

The statistics unit 1101 is configured to count a number of logins of a target source address within each of at least two time scales according to the login behavior corresponding to the target source address. Each of the at least two time scales has a respective different duration.

The comparison unit 1102 is configured to compare the number of logins of the target source address within each of the at least two time scales with a respective login threshold to obtain a comparison result.

The first determining unit 1103 is configured to determine the login behavior of the target source address as an attack behavior in response to that the comparison result satisfies an attack condition.

In some embodiments, the statistics unit 1101 is further configured to: count the number of logins of the target source address within each of the at least two time scales according to a login behavior of the target source address within a set time period, the set time period being greater than or equal to a largest one of the at least two time scales.

In some embodiments, the apparatus 1100 further includes: a second determining unit, configured to: determine that the comparison result satisfies the attack condition in response to that: the number of attack logins of the target source address in one of the at least two time scales contains a number of attack logins that is greater than a login threshold corresponding to the time scale and is greater than a first number; otherwise determine that the comparison result does not satisfy the attack condition.

In some embodiments, the apparatus 1100 further includes: a third determining unit and an inference unit.

The third determining unit is configured to acquire, for a login behavior of the target source address, a session characteristic of a session corresponding to the login behavior.

The inference unit is configured to infer a login status of the login behavior according to the session characteristic.

In some embodiments, the third determining unit is further configured to: identify whether a protocol type used by the session is a target protocol type; and in response to that the protocol type used by the session is the target protocol type, parse a data packet of the session based on the target protocol type to extract the session characteristic of the session.

In some embodiments, an extraction unit is further configured to: in response to that the target protocol type includes a preset transport security protocol, and a number of data packets in the session whose protocol type is the preset transport security protocol exceeds the second number, identify the protocol type used by the session to be the preset transport security protocol.

In some embodiments, the extraction unit is further configured to: in response to that a number of data packets in the session of which protocol type analysis fails exceeds a third number, stop analysis of a protocol type of a next data packet in the session, and identify that the protocol type used by the session is not the target protocol type.

In some embodiments, the inference unit is further configured to: determine the security protocol type used by the session; and compare the session characteristic of the session with a session characteristic threshold corresponding to the security protocol type, and determine the login status of the session according to a comparison result.

In some embodiments, the inference unit is further configured to: determine that the login status of the session is login success in response to that the session characteristic comprises a session duration and the session duration of the session is greater than a session duration threshold; and determine that the login status of the session is login failure in response to that the session duration of the session is less than or equal to the session duration threshold.

In some embodiments, the inference unit is further configured to: determine that the login status of the session is login success, in response to that the session characteristic includes at least one of a number of large data packets or a total length of the large data packets, and at least one of following is satisfied: the number of large data packets is greater than a number threshold or the total length of the large data packets is greater than a length threshold; and determine that the login status of the session is login failure in response to that at least one of following is satisfied: the number of large data packets is less than or equal to the number threshold or the total length of the large data packets is less than or equal to the length threshold.

A number of bytes in each of the large data packets is greater than a fourth number.

In some embodiments, the apparatus 1100 further includes: a display unit.

The display unit is configured to display at least one of the login behavior, the attack behavior, or the login status visually.

The descriptions of the above device embodiments are similar to that of the above method embodiments, and have the beneficial effects similar to that of the method embodiments. For technical details not disclosed in the device embodiments of the invention, reference can be made to the descriptions of the method embodiments of the invention for understanding.

It is to be noted that, in the embodiments of the invention, the information processing method may also be stored in a computer-readable storage medium if being implemented in the form of a software functional module and sold or used as a standalone product. Based on such an understanding, the technical solutions of the embodiments of the invention substantially or parts making contributions to the conventional art may be embodied in form of a software product, and the computer software product is stored in a storage medium including multiple instructions configured to enable a computer device (which may be a personal computer, a server, a network device or the like) to execute all or part of the steps of the method in each embodiment of the invention. The foregoing storage medium includes various media capable of storing program codes such as a USB flash disk, a mobile hard disk drive, a Read Only Memory (ROM), a magnetic disk, or an optical disk. Thus, the embodiments of the invention are not limited to any particular combination of hardware and software.

The embodiments of the invention provide a device, that is, a computer device, which includes a memory and a processor. A computer program executable on the processor is stored in the memory, and causes, when executed by the processor, the processor to implement the steps of the information processing method provided in the embodiments.

The embodiments of the invention provide a storage medium, that is, a computer-readable storage medium having stored thereon a computer program that, when executed by a processor, implements the steps of the information processing method provided in the embodiments.

Here, it should be pointed out that the descriptions of the above storage medium and device embodiments are similar to that of the above method embodiments, and have the beneficial effects similar to that of the method embodiments. For technical details not disclosed in the storage medium and device embodiments of the invention, reference can made to the descriptions of the method embodiments of the invention for understanding.

It is to be noted that FIG. 12 illustrates a schematic diagram of a hardware entity of a computer device according to an embodiment of the invention. As shown in FIG. 12, the computer device 1200 includes: a processor 1201, at least one communication bus 1202, a user interface 1203, at least one external communication interface 1204 and a memory 1205. Herein, the communication bus 1202 is configured to realize the connection communication between these components. Herein, the user interface 1203 may include a display screen, and the external communication interface 1204 may include a standard wired interface and a wireless interface.

The memory 1205 is configured to store instructions and applications executable by the processor 1201, and may also cache data to be processed or processed by the processor 1201 and various modules in the computer device (e.g. image data, audio data, voice communication data, and video communication data), which may be implemented through a FLASH or a Random Access Memory (RAM).

It is to be understood that "one embodiment" or "an embodiment" mentioned in the whole specification mean that specific features, structures or characteristics related to the embodiment is included in at least one embodiment of the invention. Therefore, "in one embodiment" or "in an embodiment" appearing at any place of the whole specification does not always refer to the same embodiment. In addition, these specific features, structures or characteristics may be combined in one or more embodiments in any proper manner. It is to be understood that, in various embodiments of the invention, a magnitude of a sequence number of each process does not mean an execution sequence and the execution sequence of each process should be determined by its function and an internal logic and should not form any limitation to an implementation process of the embodiments of the invention. The sequence numbers of the embodiments of the invention are used not to represent superiority-inferiority of the embodiments but only for description.

It is to be noted that terms "include" and "contain" or any other variant thereof are intended to cover nonexclusive inclusions herein, so that a process, method, object or device including a series of elements not only includes those elements but also includes other elements which are not clearly listed or further includes elements intrinsic to the process, the method, the object or the device. Without more limitations, an element defined by the statement "including a/an......" does not exclude existence of the same other elements in a process, method, object or device including the element.

In some embodiments provided by the invention, it is to be understood that the disclosed device and method may be implemented in another manner. The device embodiment described above is only schematic, and for example, division of the units is only logic function division, and other division manners may be used during practical implementation. For example, multiple units or components may be combined or integrated into another system, or some characteristics may be neglected or not executed. In addition, coupling or direct coupling or communication connection between various displayed or discussed components may be indirect coupling or communication connection implemented through some interfaces, devices or units, and may be electrical and mechanical or in other forms.

The units described as separate parts may or may not be physically separated, and parts displayed as units may or may not be physical units; and they may be located in the same place, or may also be distributed to multiple network units. Part of all of the units may be selected according to a practical requirement to achieve the purposes of the solutions of the embodiments.

In addition, functional units in embodiments of the invention may be integrated into a processing unit. Each unit may also serve as an independent unit and or two or more than two units may be integrated into a unit. The integrated unit may be implemented in a hardware form and may also be implemented in form of hardware and software functional unit.

Those of ordinary skill in the art should know that all or part of the steps of the method embodiment may be implemented by related hardware instructed through a program, the program may be stored in a computer-readable storage medium, and the program is executed to execute the steps of the method embodiment. The storage medium includes: various media capable of storing program codes such as a mobile storage device, a ROM, a magnetic disk or a compact disc.

Alternatively, when being implemented in form of software function module and sold or used as an independent product, the integrated unit of the present disclosure may also be stored in a computer-readable storage medium. Based on such an understanding, the technical solutions of the embodiments of the invention substantially or parts making contributions to the conventional art may be embodied in form of a software product, and the computer software product is stored in a storage medium, including multiple instructions configured to enable a computer device (which may be a personal computer, a server, a network device or the like) to execute all or part of the steps of the method in each embodiment of the invention. The above storage medium includes: various media capable of storing program codes such as a mobile hard disk drive, a ROM, a magnetic disk or a compact disc.

The above is only detailed description of the invention and not intended to limit the scope of protection of the invention. Any change or replacement that those skilled in the art may think of easily in the scope of technologies disclosed by the invention shall fall within the scope of protection of the invention. Therefore, the scope of protection of the present disclosure shall be subject to the scope of protection of the claims.

## Claims

1. An information processing method, comprising:
identifying, for a login behavior of a target source address, a session characteristic of a session corresponding to the login behavior and a security protocol type used by the session;
**characterized by**:
determining a session characteristic threshold based on the security protocol type; and
comparing the session characteristic with the session characteristic threshold to determine a login status of the session.

2. The information processing method of claim 1, wherein identifying, for the login behavior of the target source address, the session characteristic of the session corresponding to the login behavior and the security protocol type used by the session comprises:
determining a protocol type of each data packet in the session, the protocol type comprising: a remote login protocol and a preset transport security protocol; and
parsing each data packet based on the determined protocol type of the data packet to obtain the session characteristic of the session and the security protocol type used by the session.

3. The information processing method of claim 1, wherein determining the protocol type of each data packet in the session comprises:
determining whether the data packet conforms to a protocol characteristic of the remote login protocol;
in response to that the data packet conforms to the protocol characteristic of the remote login protocol, determining that the protocol type of the data packet is the remote login protocol;
in response to that the data packet does not conform to the protocol characteristic of the remote login protocol, determining whether the data packet conforms to a protocol characteristic of the preset transport security protocol; and
in response to that the data packet conforms to the protocol characteristics of the preset transport security protocol, determining that the protocol type of the data packet is the preset transport security protocol.

4. The information processing method of claim 3, wherein before the step of determining whether the data packet conforms to the protocol characteristic of the remote login protocol, the method further comprises:
determining whether a number of times of identification as the preset transport security protocol exceeds a first threshold M; and
in response to that the number of times of identification as the preset transport security protocol exceeds the first threshold M, directly determining that the protocol type of the data packet of the session is the preset transport security protocol; and
wherein determining whether the data packet conforms to the protocol characteristic of the remote login protocol comprises:
in response to that the number of times of identification as the preset transport security protocol does not exceed the first threshold M, determining whether the data packet conforms to the protocol characteristic of the remote login protocol.

5. The information processing method of claim 4, wherein after determining whether the data packet conforms to the protocol characteristic of the preset transport security protocol, the method further comprises:
in response to that the data packet does not conform to the protocol characteristic of the preset transport security protocol, determining that protocol type identification analysis fails;
wherein before determining whether the data packet conforms to the protocol characteristic of the remote login protocol, and after determining whether the number of times of identification as the preset transport security protocol exceeds the first threshold M, the method further comprises:
determining whether a number of failures in protocol type identification analysis exceeds a second threshold Q; and
wherein determining whether the data packet conforms to the protocol characteristic of the remote login protocol comprises:
in response to that the number of failures in protocol type identification analysis does not exceed the second threshold Q, determining whether the data packet conforms to the protocol characteristic of the remote login protocol.

6. The information processing method of any one of claims 1-5, wherein:
the session characteristic comprises a session duration, and the session characteristic threshold comprises a session duration threshold; and comparing the session characteristic with the session characteristic threshold to determine the login status of the session comprises:
in response to that the session duration of the session is greater than the session duration threshold, determining that the login status of the session is login success;
otherwise determining that the login status of the session is login failure; or
the session characteristic comprises at least one of: a number of large data packets, or a total length of the large data packets, and a number of bytes in each of the large data packets is greater than a fourth number; the session characteristic threshold comprises at least one of a number threshold or a length threshold correspondingly; and comparing the session characteristic with the session characteristic threshold to determine the login status of the session comprises:
in response to that the number of large data packets is greater than the number threshold, or that the total length of the large data packets is greater than the length threshold, or that the number of large data packets is greater than the number threshold and the total length of the large data packets is greater than the length threshold, determining that the login status of the session is login success;
otherwise determining that the login status of the session is login failure.

7. The information processing method of any one of claims 1-6, further comprising:
counting (S301) a number of logins of the target source address within each of at least two time scales, wherein each of the at least two time scales has a respective different duration;
comparing (S302) the number of logins of the target source address within each of the at least two time scales with a respective login threshold to obtain a comparison result; and
determining (S303) the login behavior of the target source address as an attack behavior in response to that the comparison result satisfies an attack condition.

8. An information processing apparatus, comprising:
a third determining unit, configured to identify, for a login behavior of a target source address, a session characteristic of a session corresponding to the login behavior and a security protocol type used by the session; **characterized by**:
the third determining unit being further configured to determine a session characteristic threshold based on the security protocol type; and
an inference unit, configured to compare the session characteristic with the session characteristic threshold to determine a login status of the session.

9. The information processing apparatus of claim 8, wherein the third determining unit is further configured to:
determine a protocol type of each data packet in the session, the protocol type comprising: a remote login protocol and a preset transport security protocol; and
parse each data packet based on the determined protocol type of the data packet to obtain the session characteristic of the session and the security protocol type used by the session.

10. The information processing apparatus of claim 8, wherein the third determining unit is further configured to:
determine whether the data packet conforms to a protocol characteristic of the remote login protocol;
in response to that the data packet conforms to the protocol characteristic of the remote login protocol, determine that the protocol type of the data packet is the remote login protocol;
in response to that the data packet does not conform to the protocol characteristic of the remote login protocol, determine whether the data packet conforms to a protocol characteristic of the preset transport security protocol; and
in response to that the data packet conforms to the protocol characteristics of the preset transport security protocol, determine that the protocol type of the data packet is the preset transport security protocol.

11. The information processing apparatus of claim 10, wherein before determining whether the data packet conforms to the protocol characteristic of the remote login protocol, the third determining unit is further configured to:
determine whether a number of times of identification as the preset transport security protocol exceeds a first threshold M;
in response to that the number of times of identification as the preset transport security protocol exceeds the first threshold M, directly determine that the protocol type of the data packet of the session is the preset transport security protocol; and
in response to that the number of times of identification as the preset transport security protocol does not exceed the first threshold M, determine whether the data packet conforms to the protocol characteristic of the remote login protocol.

12. The information processing apparatus of claim 11, wherein after determining whether the data packet conforms to the protocol characteristic of the preset transport security protocol, the third determining unit is further configured to:
in response to that the data packet does not conform to the protocol characteristic of the preset transport security protocol, determine that protocol type identification analysis fails; and
wherein before determining whether the data packet conforms to the protocol characteristic of the remote login protocol, and after determining whether the number of times of identification as the preset transport security protocol exceeds the first threshold M, the third determining unit is further configured to:
determine whether a number of failures in protocol type identification analysis exceeds a second threshold Q; and
in response to that the number of failures in protocol type identification analysis does not exceed the second threshold Q, determine whether the data packet conforms to the protocol characteristic of the remote login protocol.

13. The information processing apparatus of any one of claims 8-12, wherein:
the session characteristic comprises a session duration, and the session characteristic threshold comprises a session duration threshold; and the inference unit is further configured to:
in response to that the session duration of the session is greater than the session duration threshold, determine that the login status of the session is login success;
otherwise determine that the login status of the session is login failure; or
the session characteristic comprises at least one of: a number of large data packets, or a total length of the large data packets, and a number of bytes in each of the large data packets is greater than a fourth number; the session characteristic threshold comprises at least one of a number threshold or a length threshold correspondingly; and the inference unit is further configured to:
in response to that the number of large data packets is greater than the number threshold, or that the total length of the large data packets is greater than the length threshold, or that the number of large data packets is greater than the number threshold and the total length of the large data packets is greater than the length threshold, determine that the login status of the session is login success;
otherwise determine that the login status of the session is login failure.

14. The information processing apparatus of any one of claims 8-13, further comprising:
a statistics unit (1101), configured to count a number of logins of the target source address within each of at least two time scales, wherein each of the at least two time scales has a respective different duration;
a comparison unit (1102), configured to compare the number of logins of the target source address within each of the at least two time scales with a respective login threshold to obtain a comparison result; and
a first determining unit (1103), configured to determine the login behavior of the target source address as an attack behavior in response to that the comparison result satisfies an attack condition.

15. A storage medium having stored thereon a computer program that, when executed by a processor (1201), causes the processor (1201) to implement the steps in the information processing method of any one of claims 1-7.

## Patentansprüche

1. Informationsverarbeitungsverfahren, umfassend:
Identifizieren, für ein Anmeldeverhalten einer Zielquelladresse, eines Sitzungsmerkmals einer Sitzung, das dem Anmeldeverhalten entspricht, und eines Sicherheitsprotokolltyps, der von der Sitzung verwendet wird; **gekennzeichnet durch**:
Bestimmen einer Sitzungsmerkmalsschwelle auf Grundlage des Sicherheitsprotokolltyps; und
Vergleichen des Sitzungsmerkmals mit der Sitzungsmerkmalsschwelle, um einen Anmeldestatus der Sitzung zu bestimmen.

2. Informationsverarbeitungsverfahren nach Anspruch 1, wobei das Identifizieren, für das Anmeldeverhalten der Zielquelladresse, des Sitzungsmerkmals der Sitzung, das dem Anmeldeverhalten entspricht, und des Sicherheitsprotokolltyps, der von der Sitzung verwendet wird, Folgendes umfasst:
Bestimmen eines Protokolltyps jedes Datenpakets in der Sitzung, wobei der Protokolltyp umfasst: ein Remote-Anmeldeprotokoll und ein voreingestelltes Transportsicherheitsprotokoll; und
Parsen jedes Datenpakets auf Grundlage des bestimmten Protokolltyps des Datenpakets, um das Sitzungsmerkmal der Sitzung und den von der Sitzung verwendeten Sicherheitsprotokolltyp zu erhalten.

3. Informationsverarbeitungsverfahren nach Anspruch 1, wobei das Bestimmen des Protokolltyps jedes Datenpakets in der Sitzung Folgendes umfasst:
Bestimmen, ob das Datenpaket einem Protokollmerkmal des Remote-Anmeldeprotokolls entspricht;
als Reaktion darauf, dass das Datenpaket dem Protokollmerkmal des Remote-Anmeldeprotokolls entspricht, Bestimmen, dass der Protokolltyp des Datenpakets das Remote-Anmeldeprotokoll ist;
als Reaktion darauf, dass das Datenpaket nicht dem Protokollmerkmal des Remote-Anmeldeprotokolls entspricht, Bestimmen, ob das Datenpaket einem Protokollmerkmal des voreingestellten Transportsicherheitsprotokolls entspricht; und
als Reaktion darauf, dass das Datenpaket den Protokollmerkmalen des voreingestellten Transportsicherheitsprotokolls entspricht, Bestimmen, dass der Protokolltyp des Datenpakets das voreingestellte Transportsicherheitsprotokoll ist.

4. Informationsverarbeitungsverfahren nach Anspruch 3, wobei das Verfahren vor dem Schritt des Bestimmens, ob das Datenpaket dem Protokollmerkmal des Remote-Anmeldeprotokolls entspricht, weiter Folgendes umfasst:
Bestimmen, ob eine Anzahl von Malen einer Identifizierung als das voreingestellte Transportsicherheitsprotokoll eine erste Schwelle M überschreitet; und
als Reaktion darauf, dass die Anzahl von Malen einer Identifizierung als das voreingestellte Transportsicherheitsprotokoll die erste Schwelle M überschreitet, direkt Bestimmen, dass der Protokolltyp des Datenpakets der Sitzung das voreingestellte Transportsicherheitsprotokoll ist; und
wobei das Bestimmen, ob das Datenpaket dem Protokollmerkmal des Remote-Anmeldeprotokolls entspricht, Folgendes umfasst:
als Reaktion darauf, dass die Anzahl von Malen einer Identifizierung als das voreingestellte Transportsicherheitsprotokoll die erste Schwelle M nicht überschreitet, Bestimmen, ob das Datenpaket dem Protokollmerkmal des Remote-Anmeldeprotokolls entspricht.

5. Informationsverarbeitungsverfahren nach Anspruch 4, wobei das Verfahren nach dem Bestimmen, ob das Datenpaket dem Protokollmerkmal des voreingestellten Transportsicherheitsprotokolls entspricht, weiter Folgendes umfasst:
als Reaktion darauf, dass das Datenpaket nicht dem Protokollmerkmal des voreingestellten Transportsicherheitsprotokolls entspricht, Bestimmen, dass die Protokolltyp-Identifikationsanalyse fehlgeschlagen ist;
wobei das Verfahren vor dem Bestimmen, ob das Datenpaket dem Protokollmerkmal des Remote-Anmeldeprotokolls entspricht, und nach dem Bestimmen, ob die Anzahl von Malen einer Identifizierung als das voreingestellte Transportsicherheitsprotokoll die erste Schwelle M überschreitet, weiter Folgendes umfasst:
Bestimmen, ob eine Anzahl von Fehlschlägen bei der Protokolltyp-Identifikationsanalyse eine zweite Schwelle Q überschreitet; und
wobei das Bestimmen, ob das Datenpaket dem Protokollmerkmal des Remote-Anmeldeprotokolls entspricht, Folgendes umfasst:
als Reaktion darauf, dass die Anzahl von Fehlschlägen bei der Protokolltyp-Identifikationsanalyse die zweite Schwelle Q nicht überschreitet, Bestimmen, ob das Datenpaket dem Protokollmerkmal des Remote-Anmeldeprotokolls entspricht.

6. Informationsverarbeitungsverfahren nach einem der Ansprüche 1-5, wobei:
das Sitzungsmerkmal eine Sitzungsdauer umfasst und die Sitzungsmerkmalsschwelle eine Sitzungsdauerschwelle umfasst; und das Vergleichen des Sitzungsmerkmals mit der Sitzungsmerkmalsschwelle, um den Anmeldestatus der Sitzung zu bestimmen, Folgendes umfasst:
als Reaktion darauf, dass die Sitzungsdauer der Sitzung größer ist als die Sitzungsdauerschwelle, Bestimmen, dass der Anmeldestatus der Sitzung "Anmeldung erfolgreich" lautet;
andernfalls Bestimmen, dass der Anmeldestatus der Sitzung "Anmeldung fehlgeschlagen" lautet; oder
das Sitzungsmerkmal mindestens eines umfasst von: einer Anzahl großer Datenpakete, oder einer Gesamtlänge der großen Datenpakete, und dass eine Anzahl von Bytes in jedem der großen Datenpakete größer ist als eine vierte Anzahl; die Sitzungsmerkmalsschwelle dementsprechend mindestens eine von einer Anzahlschwelle oder einer Längenschwelle umfasst; und das Vergleichen des Sitzungsmerkmals mit der Sitzungsmerkmalsschwelle, um den Anmeldestatus der Sitzung zu bestimmen, Folgendes umfasst:
als Reaktion darauf, dass die Anzahl großer Datenpakete größer ist als die Anzahlschwelle, oder dass die Gesamtlänge der großen Datenpakete größer ist als die Längenschwelle, oder dass die Anzahl großer Datenpakete größer ist als die Anzahlschwelle und die Gesamtlänge der großen Datenpakete größer ist als die Längenschwelle, Bestimmen, dass der Anmeldestatus der Sitzung "Anmeldung erfolgreich" lautet;
andernfalls Bestimmen, dass der Anmeldestatus der Sitzung "Anmeldung fehlgeschlagen" lautet.

7. Informationsverarbeitungsverfahren nach einem der Ansprüche 1-6, weiter umfassend:
Zählen (S301) einer Anzahl von Anmeldungen der Zielquelladresse innerhalb jeder von mindestens zwei Zeitskalen, wobei jede der mindestens zwei Zeitskalen eine jeweilige unterschiedliche Dauer aufweist;
Vergleichen (S302) der Anzahl von Anmeldungen der Zielquelladresse innerhalb jeder der mindestens zwei Zeitskalen mit einer jeweiligen Anmeldeschwelle, um ein Vergleichsergebnis zu erhalten; und
Bestimmen (S303) des Anmeldeverhaltens der Zielquelladresse als Angriffsverhalten als Reaktion darauf, dass das Vergleichsergebnis eine Angriffsbedingung erfüllt.

8. Informationsverarbeitungseinrichtung, umfassend:
eine dritte Bestimmungseinheit, die konfiguriert ist, um für ein Anmeldeverhalten einer Zielquelladresse ein Sitzungsmerkmal einer Sitzung, das dem Anmeldeverhalten entspricht, und einen von der Sitzung verwendeten Sicherheitsprotokolltyp zu identifizieren; **gekennzeichnet durch**:
die dritte Bestimmungseinheit, die weiter konfiguriert ist, um eine Sitzungsmerkmalsschwelle auf Grundlage des Sicherheitsprotokolltyps zu bestimmen; und
eine Inferenzeinheit, die konfiguriert ist, um das Sitzungsmerkmal mit der Sitzungsmerkmalsschwelle zu vergleichen, um einen Anmeldestatus der Sitzung zu bestimmen.

9. Informationsverarbeitungseinrichtung nach Anspruch 8, wobei die dritte Bestimmungseinheit weiter konfiguriert ist, um:
einen Protokolltyp jedes Datenpakets in der Sitzung zu bestimmen, wobei der Protokolltyp umfasst: ein Remote-Anmeldeprotokoll und ein voreingestelltes Transportsicherheitsprotokoll; und
jedes Datenpaket auf Grundlage des bestimmten Protokolltyps des Datenpakets zu parsen, um das Sitzungsmerkmal der Sitzung und den von der Sitzung verwendeten Sicherheitsprotokolltyp zu erhalten.

10. Informationsverarbeitungseinrichtung nach Anspruch 8, wobei die dritte Bestimmungseinheit weiter konfiguriert ist, um:
zu bestimmen, ob das Datenpaket einem Protokollmerkmal des Remote-Anmeldeprotokolls entspricht;
als Reaktion darauf, dass das Datenpaket dem Protokollmerkmal des Remote-Anmeldeprotokolls entspricht, zu bestimmen, dass der Protokolltyp des Datenpakets das Remote-Anmeldeprotokoll ist;
als Reaktion darauf, dass das Datenpaket nicht dem Protokollmerkmal des Remote-Anmeldeprotokolls entspricht, zu bestimmen, ob das Datenpaket einem Protokollmerkmal des voreingestellten Transportsicherheitsprotokolls entspricht; und
als Reaktion darauf, dass das Datenpaket den Protokollmerkmalen des voreingestellten Transportsicherheitsprotokolls entspricht, zu bestimmen, dass der Protokolltyp des Datenpakets das voreingestellte Transportsicherheitsprotokoll ist.

11. Informationsverarbeitungseinrichtung nach Anspruch 10, wobei die dritte Bestimmungseinheit vor dem Bestimmen, ob das Datenpaket dem Protokollmerkmal des Remote-Anmeldeprotokolls entspricht, weiter konfiguriert ist, um:
zu bestimmen, ob eine Anzahl von Malen einer Identifizierung als das voreingestellte Transportsicherheitsprotokoll eine erste Schwelle M überschreitet;
als Reaktion darauf, dass die Anzahl von Malen einer Identifizierung als das voreingestellte Transportsicherheitsprotokoll die erste Schwelle M überschreitet, direkt zu bestimmen, dass der Protokolltyp des Datenpakets der Sitzung das voreingestellte Transportsicherheitsprotokoll ist; und
als Reaktion darauf, dass die Anzahl von Malen einer Identifizierung als das voreingestellte Transportsicherheitsprotokoll die erste Schwelle M nicht überschreitet, zu bestimmen, ob das Datenpaket dem Protokollmerkmal des Remote-Anmeldeprotokolls entspricht.

12. Informationsverarbeitungseinrichtung nach Anspruch 11, wobei die dritte Bestimmungseinheit nach dem Bestimmen, ob das Datenpaket dem Protokollmerkmal des voreingestellten Transportsicherheitsprotokolls entspricht, weiter konfiguriert ist, um:
als Reaktion darauf, dass das Datenpaket nicht dem Protokollmerkmal des voreingestellten Transportsicherheitsprotokolls entspricht, zu bestimmen, dass die Protokolltyp-Identifikationsanalyse fehlgeschlagen ist; und
wobei die dritte Bestimmungseinheit vor dem Bestimmen, ob das Datenpaket dem Protokollmerkmal des Remote-Anmeldeprotokolls entspricht, und nach dem Bestimmen, ob die Anzahl von Malen einer Identifizierung als das voreingestellte Transportsicherheitsprotokoll die erste Schwelle M überschreitet, weiter konfiguriert ist, um:
zu bestimmen, ob eine Anzahl von Fehlschlägen bei der Protokolltyp-Identifikationsanalyse eine zweite Schwelle Q überschreitet; und
als Reaktion darauf, dass die Anzahl von Fehlschlägen bei der Protokolltyp-Identifikationsanalyse die zweite Schwelle Q nicht überschreitet, zu bestimmen, ob das Datenpaket dem Protokollmerkmal des Remote-Anmeldeprotokolls entspricht.

13. Informationsverarbeitungseinrichtung nach einem der Ansprüche 8-12, wobei:
das Sitzungsmerkmal eine Sitzungsdauer umfasst, und die Sitzungsmerkmalsschwelle eine Sitzungsdauerschwelle umfasst; und die Inferenzeinheit weiter konfiguriert ist, um:
als Reaktion darauf, dass die Sitzungsdauer der Sitzung größer ist als die Sitzungsdauerschwelle, zu bestimmen, dass der Anmeldestatus der Sitzung "Anmeldung erfolgreich" lautet;
andernfalls zu bestimmen, dass der Anmeldestatus der Sitzung "Anmeldung fehlgeschlagen" lautet; oder
das Sitzungsmerkmal mindestens eines umfasst von: einer Anzahl großer Datenpakete, oder einer Gesamtlänge der großen Datenpakete, und dass eine Anzahl von Bytes in jedem der großen Datenpakete größer ist als eine vierte Anzahl; die Sitzungsmerkmalsschwelle dementsprechend mindestens eine von einer Anzahlschwelle oder einer Längenschwelle umfasst; und die Inferenzeinheit weiter konfiguriert ist, um:
als Reaktion darauf, dass die Anzahl großer Datenpakete größer ist als die Anzahlschwelle, oder dass die Gesamtlänge der großen Datenpakete größer ist als die Längenschwelle, oder dass die Anzahl großer Datenpakete größer ist als die Anzahlschwelle und die Gesamtlänge der großen Datenpakete größer ist als die Längenschwelle, zu bestimmen, dass der Anmeldestatus der Sitzung "Anmeldung erfolgreich" lautet;
andernfalls zu bestimmen, dass der Anmeldestatus der Sitzung "Anmeldung fehlgeschlagen" lautet.

14. Informationsverarbeitungseinrichtung nach einem der Ansprüche 8-13, weiter umfassend:
eine Statistikeinheit (1101), die konfiguriert ist, um eine Anzahl von Anmeldungen der Zielquelladresse innerhalb jeder von mindestens zwei Zeitskalen zu zählen, wobei jede der mindestens zwei Zeitskalen eine jeweilige unterschiedliche Dauer aufweist;
eine Vergleichseinheit (1102), die konfiguriert ist, um die Anzahl von Anmeldungen der Zielquelladresse innerhalb jeder der mindestens zwei Zeitskalen mit einer jeweiligen Anmeldeschwelle zu vergleichen, um ein Vergleichsergebnis zu erhalten; und
eine erste Bestimmungseinheit (1103), die konfiguriert ist, um als Reaktion darauf, dass das Vergleichsergebnis eine Angriffsbedingung erfüllt, das Anmeldeverhalten der Zielquelladresse als Angriffsverhalten zu bestimmen.

15. Speichermedium, das ein darauf gespeichertes Computerprogramm aufweist, das, wenn es von einem Prozessor (1201) ausgeführt wird, den Prozessor (1201) veranlasst, die Schritte in dem Informationsverarbeitungsverfahren nach einem der Ansprüche 1-7 zu implementieren.

## Revendications

1. Procédé de traitement d'informations, comprenant :
l'identification, pour un comportement de connexion d'une adresse source cible, d'une caractéristique de session d'une session correspondant au comportement de connexion et un type de protocole de sécurité utilisé par la session ; **caractérisé par** :
la détermination d'un seuil de caractéristique de session sur la base du type de protocole de sécurité ; et
la comparaison de la caractéristique de session au seuil de caractéristique de session pour déterminer un état de connexion de la session.

2. Procédé de traitement d'informations selon la revendication 1, dans lequel l'identification, pour le comportement de connexion de l'adresse source cible, de la caractéristique de session de la session correspondant au comportement de connexion et du type de protocole de sécurité utilisé par la session comprend :
la détermination d'un type de protocole de chaque paquet de données dans la session, le type de protocole comprenant : un protocole de connexion à distance et un protocole de sécurité de transport prédéfini ; et
l'analyse de chaque paquet de données sur la base du type de protocole déterminé du paquet de données pour obtenir la caractéristique de session de la session et le type de protocole de sécurité utilisé par la session.

3. Procédé de traitement d'informations selon la revendication 1, dans lequel la détermination du type de protocole de chaque paquet de données dans la session comprend :
la détermination de si le paquet de données est conforme à une caractéristique de protocole du protocole de connexion à distance ;
en réponse au fait que le paquet de données est conforme à la caractéristique de protocole du protocole de connexion à distance, la détermination que le type de protocole du paquet de données est le protocole de connexion à distance ;
en réponse au fait que le paquet de données n'est pas conforme à la caractéristique de protocole du protocole de connexion à distance, la détermination de si le paquet de données est conforme à une caractéristique de protocole du protocole de sécurité de transport prédéfini ; et
en réponse au fait que le paquet de données est conforme à la caractéristique de protocole du protocole de sécurité de transport prédéfini, la détermination que le type de protocole du paquet de données est le protocole de sécurité de transport prédéfini.

4. Procédé de traitement d'informations selon la revendication 3, dans lequel, avant l'étape de détermination de si le paquet de données est conforme à la caractéristique de protocole du protocole de connexion à distance, le procédé comprend en outre :
la détermination de si un nombre d'identifications en tant que protocole de sécurité de transport prédéfini dépasse un premier seuil M ; et
en réponse au fait que le nombre d'identifications en tant que protocole de sécurité de transport prédéfini dépasse le premier seuil M, la détermination directe que le type de protocole du paquet de données de la session est le protocole de sécurité de transport prédéfini ; et
dans lequel la détermination de si le paquet de données est conforme à la caractéristique de protocole du protocole de connexion à distance comprend :
en réponse au fait que le nombre d'identifications en tant que protocole de sécurité de transport prédéfini ne dépasse pas le premier seuil M, la détermination de si le paquet de données est conforme à la caractéristique de protocole du protocole de connexion à distance.

5. Procédé de traitement d'informations selon la revendication 4, dans lequel, après avoir déterminé si le paquet de données est conforme à la caractéristique de protocole du protocole de sécurité de transport prédéfini, le procédé comprend en outre :
en réponse au fait que le paquet de données n'est pas conforme à la caractéristique de protocole du protocole de sécurité de transport prédéfini, la détermination que l'analyse d'identification de type de protocole échoue ;
dans lequel, avant de déterminer si le paquet de données est conforme à la caractéristique de protocole du protocole de connexion à distance, et après avoir déterminé si le nombre d'identifications en tant que protocole de sécurité de transport prédéfini dépasse le premier seuil M, le procédé comprend en outre :
la détermination de si un nombre d'échecs dans l'analyse d'identification de type de protocole dépasse un second seuil Q; et
dans lequel la détermination de si le paquet de données est conforme à la caractéristique de protocole du protocole de connexion à distance comprend :
en réponse au fait que le nombre d'échecs dans l'analyse d'identification de type de protocole ne dépasse pas le second seuil Q, la détermination de si le paquet de données est conforme à la caractéristique de protocole du protocole de connexion à distance.

6. Procédé de traitement d'informations selon l'une quelconque des revendications 1-5, dans lequel :
la caractéristique de session comprend une durée de session, et le seuil de caractéristique de session comprend un seuil de durée de session ; et la comparaison de la caractéristique de session au seuil de caractéristique de session pour déterminer l'état de connexion de la session comprend :
en réponse au fait que la durée de session de la session est supérieure au seuil de durée de session, la détermination que l'état de connexion de la session est une réussite de connexion ;
dans le cas contraire, la détermination que l'état de connexion de la session est un échec de connexion ; ou
la caractéristique de session comprend au moins l'un parmi : un nombre de grands paquets de données, ou une longueur totale des grands paquets de données, et un nombre d'octets dans chacun des grands paquets de données est supérieur à un quatrième nombre ; le seuil de caractéristique de session comprend au moins un parmi un seuil de nombre ou un seuil de longueur respectivement ; et la comparaison de la caractéristique de session au seuil de caractéristique de session pour déterminer l'état de connexion de la session comprend :
en réponse au fait que le nombre de grands paquets de données est supérieur au seuil de nombre, ou que la longueur totale des grands paquets de données est supérieure au seuil de longueur, ou que le nombre de grands paquets de données est supérieur au seuil de nombre et que la longueur totale des grands paquets de données est supérieure au seuil de longueur, la détermination que l'état de connexion de la session est une réussite de connexion ;
dans le cas contraire, la détermination que l'état de connexion de la session est un échec de connexion.

7. Procédé de traitement d'informations selon l'une quelconque des revendications 1-6, comprenant en outre :
le comptage (S301) d'un nombre de connexions de l'adresse source cible dans chacune d'au moins deux échelles de temps, dans lequel chacune des au moins deux échelles de temps présente une durée respective différente ;
la comparaison (S302) du nombre de connexions de l'adresse source cible dans chacune des au moins deux échelles de temps à un seuil de connexion respectif pour obtenir un résultat de comparaison ; et
la détermination (S303) du comportement de connexion de l'adresse source cible en tant que comportement d'attaque en réponse au fait que le résultat de comparaison satisfait à une condition d'attaque.

8. Appareil de traitement d'informations, comprenant :
une troisième unité de détermination, configurée pour identifier, pour un comportement de connexion d'une adresse source cible, une caractéristique de session d'une session correspondant au comportement de connexion et un type de protocole de sécurité utilisé par la session ; **caractérisé par** :
la troisième unité de détermination étant en outre configurée pour déterminer un seuil de caractéristique de session sur la base du type de protocole de sécurité ; et
une unité d'inférence, configurée pour comparer la caractéristique de session au seuil de caractéristique de session pour déterminer un état de connexion de la session.

9. Appareil de traitement d'informations selon la revendication 8, dans lequel la troisième unité de détermination est en outre configurée pour :
déterminer un type de protocole de chaque paquet de données dans la session, le type de protocole comprenant : un protocole de connexion à distance et un protocole de sécurité de transport prédéfini ; et
analyser chaque paquet de données sur la base du type de protocole déterminé du paquet de données pour obtenir la caractéristique de session de la session et le type de protocole de sécurité utilisé par la session.

10. Appareil de traitement d'informations selon la revendication 8, dans lequel la troisième unité de détermination est en outre configurée pour :
déterminer si le paquet de données est conforme à une caractéristique de protocole du protocole de connexion à distance ;
en réponse au fait que le paquet de données est conforme à la caractéristique de protocole du protocole de connexion à distance, déterminer que le type de protocole du paquet de données est le protocole de connexion à distance ;
en réponse au fait que le paquet de données n'est pas conforme à la caractéristique de protocole du protocole de connexion à distance, déterminer si le paquet de données est conforme à une caractéristique de protocole du protocole de sécurité de transport prédéfini ; et
en réponse au fait que le paquet de données est conforme à la caractéristique de protocole du protocole de sécurité de transport prédéfini, déterminer que le type de protocole du paquet de données est le protocole de sécurité de transport prédéfini.

11. Appareil de traitement d'informations selon la revendication 10, dans lequel, avant de déterminer si le paquet de données est conforme à la caractéristique de protocole du protocole de connexion à distance, la troisième unité de détermination est en outre configurée pour :
déterminer si un nombre d'identifications en tant que protocole de sécurité de transport prédéfini dépasse un premier seuil M ;
en réponse au fait que le nombre d'identifications en tant que protocole de sécurité de transport prédéfini dépasse le premier seuil M, déterminer directement que le type de protocole du paquet de données de la session est le protocole de sécurité de transport prédéfini ; et
en réponse au fait que le nombre d'identifications en tant que protocole de sécurité de transport prédéfini ne dépasse pas le premier seuil M, déterminer si le paquet de données est conforme à la caractéristique de protocole du protocole de connexion à distance.

12. Appareil de traitement d'informations selon la revendication 11, dans lequel, après avoir déterminé si le paquet de données est conforme à la caractéristique de protocole du protocole de sécurité de transport prédéfini, la troisième unité de détermination est en outre configurée pour :
en réponse au fait que le paquet de données n'est pas conforme à la caractéristique de protocole du protocole de sécurité de transport prédéfini, déterminer que l'analyse d'identification de type de protocole échoue ; et
dans lequel, avant de déterminer si le paquet de données est conforme à la caractéristique de protocole du protocole de connexion à distance, et après avoir déterminé si le nombre d'identifications en tant que protocole de sécurité de transport prédéfini dépasse le premier seuil M, la troisième unité de détermination est en outre configurée pour :
déterminer si un nombre d'échecs dans l'analyse d'identification de type de protocole dépasse un second seuil Q; et
en réponse au fait que le nombre d'échecs dans l'analyse d'identification de type de protocole ne dépasse pas le second seuil Q, déterminer si le paquet de données est conforme à la caractéristique de protocole du protocole de connexion à distance.

13. Appareil de traitement d'informations selon l'une quelconque des revendications 8-12, dans lequel :
la caractéristique de session comprend une durée de session, et le seuil de caractéristique de session comprend un seuil de durée de session ; et l'unité d'inférence est en outre configurée pour :
en réponse au fait que la durée de session de la session est supérieure au seuil de durée de session, déterminer que l'état de connexion de la session est une réussite de connexion ;
dans le cas contraire, déterminer que l'état de connexion de la session est un échec de connexion ; ou
la caractéristique de session comprend au moins l'un parmi : un nombre de grands paquets de données, ou une longueur totale des grands paquets de données, et un nombre d'octets dans chacun des grands paquets de données est supérieur à un quatrième nombre ; le seuil de caractéristique de session comprend au moins un parmi un seuil de nombre ou un seuil de longueur respectivement ; et l'unité d'inférence est en outre configurée pour :
en réponse au fait que le nombre de grands paquets de données est supérieur au seuil de nombre, ou que la longueur totale des grands paquets de données est supérieure au seuil de longueur, ou que le nombre de grands paquets de données est supérieur au seuil de nombre et que la longueur totale des grands paquets de données est supérieure au seuil de longueur, déterminer que l'état de connexion de la session est une réussite de connexion ;
dans le cas contraire, déterminer que l'état de connexion de la session est un échec de connexion.

14. Appareil de traitement d'informations selon l'une quelconque des revendications 8-13, comprenant en outre :
une unité de statistiques (1101), configurée pour compter un nombre de connexions de l'adresse source cible dans chacune d'au moins deux échelles de temps, dans lequel chacune des au moins deux échelles de temps présente une durée respective différente ;
une unité de comparaison (1102), configurée pour comparer le nombre de connexions de l'adresse source cible dans chacune des au moins deux échelles de temps à un seuil de connexion respectif pour obtenir un résultat de comparaison ; et
une première unité de détermination (1103), configurée pour déterminer le comportement de connexion de l'adresse source cible en tant que comportement d'attaque en réponse au fait que le résultat de comparaison satisfait à une condition d'attaque.

15. Support de stockage sur lequel est stocké un programme informatique qui, lorsqu'il est exécuté par un processeur (1201), amène le processeur (1201) à mettre en oeuvre les étapes du procédé de traitement d'informations selon l'une quelconque des revendications 1-7.
